# FASCICULE DE BREVET EUROPEEN

(11) **EP 0 395 505 B1**
(45) Date de publication et mention de la délivrance du brevet: **12.01.1994**
(21) Numéro de dépôt: 90401119.4
(22) Date de dépôt: 25.04.1990
(51) Int. Cl.: H02G 3/10, F16B 43/00, F16B 41/00

(54) **Dispositif de fixation pour article à rapporter sur un quelconque support, et article, en particulier boîtier, équipé d'au moins un tel dispositif de fixation**
Vorrichtung zur Befestigung von Gegenständen auf einer beliebigen Unterlage und Gegenstand, insbesondere Gehäuse, versehen mit mindestens einer derartigen Befestigungsvorrichtung
Fixing device for an object to be attached to any support, and object, particularly casing, having at least one of such fixing devices

(30) Priorité: 28.04.1989 FR 8905707
(43) Date de publication de la demande: 31.10.1990
(73) Titulaire: LEGRAND, F-87045 Limoges Cédex (FR)
(72) Inventeur: Parlatore, Roger, F-87920 Condat (FR); Leluc, Alain, F-87110 Solignac (FR); Brousse, Robert, F-19500 Meyssac (FR)
(74) Mandataire: CABINET BONNET-THIRION

(56) Documents cités:
- DE-U- 7 415 756
- DE-U- 7 608 158
- FR-A- 2 539 828
- US-A- 4 199 072

## Description

La présente invention concerne d'une manière générale la fixation d'un quelconque article sur un quelconque support.

Elle vise plus particulièrement, mais non nécessairement exclusivement, le cas où il s'agit d'un boîtier, qui, destiné à servir de logement pour un quelconque appareillage, et, par exemple, pour un quelconque appareillage électrique, est à rapporter sur une quelconque paroi.

Plus particulièrement, encore, la présente invention vise le cas où, pour être rapporté sur un quelconque support, l'article du genre concerné, qu'il s'agisse d'un boîtier ou d'un autre article, est équipé d'au moins un dispositif de fixation comportant, ménagé dans celle de ses parties, considérée ci-après comme constituant une platine, et il s'agit en pratique du fond dans le cas d'un boîtier, par laquelle il est destiné à être appliqué au support sur lequel il doit être rapporté, au moins un perçage, qui est propre au passage d'un quelconque moyen de fixation, par exemple d'une vis, et qui peut soit être de contour circulaire, soit être allongé en boutonnière lorsque doit par ailleurs être laissée la possibilité d'un éventuel rattrapage d'aplomb à la pose.

Plus particulièrement, encore, la présente invention vise le cas où la fixation correspondante doit se faire de manière étanche, pour éviter une éventuelle remontée d'humidité à la faveur du ou des perçages mis en oeuvre.

Dans certains boîtiers, il a été proposé, pour ce faire, de disposer chacun de ces perçages au fond d'un puits qui court sur toute la hauteur du boîtier, et qui, au débouché de celui-ci, se trouve occulté par le joint d'étanchéité usuellement prévu par ailleurs entre ce boîtier et l'ensemble du couvercle destiné à le fermer.

Mais l'emprise d'un tel puits dans un tel boîtier vient inévitablement en déduction du volume disponible à l'intérieur de celui-ci, au détriment de sa capacité d'accueil pour le ou les appareillages à loger, et cet inconvénient se trouve majoré si, comme indiqué ci-dessus, le ou les perçages en cause sont allongés en boutonnière.

Dans d'autres boîtiers, l'étanchéité nécessaire est assurée en associant, à chacun des perçages mis en oeuvre, d'une part, un joint d'étanchéité, qui est à superposer à la platine correspondante à l'aplomb de ce percage, et, d'autre part, une rondelle d'appui, qui est à interposer entre ce joint d'étanchéité et la tête du moyen de fixation correspondant.

Mais cette disposition a pour inconvénient de nécessiter, à la pose, la manipulation d'éléments supplémentaires, en l'espèce le joint d'étanchéité et la rondelle d'appui, qui, du fait de leur relativement petite dimension, peuvent facilement venir à échapper, et, alors, en pratique, à être perdus, la manipulation correspondante étant d'autant plus malaisée dans le cas de boîtiers qu'elle doit être pratiquée de l'intérieur d'un tel boîtier.

La présente invention a d'une manière générale pour objet une disposition permettant d'éviter ces inconvénients.

De manière plus précise, elle a pour objet un dispositif de fixation pour article à rapporter sur un quelconque support, du genre comportant au moins un perçage ménagé dans une platine dudit article pour le passage d'un moyen de fixation par exemple une vis, un joint d'étanchéité à superposer à ladite platine à l'aplomb de ce perçage, une rondelle d'appui à superposer audit joint d'étanchéité et des moyens de confinement associés audit joint d'étanchéité pour s'opposer à un échappement de ce joint d'étanchéité hors de l'espace s'étendant entre ladite rondelle d'appui et ladite platine, caractérisé en ce que, à ladite rondelle d'appui, sont associés des moyens d'immobilisation qui s'opposent à tout déplacement substantiel de cette rondelle d'appui parallèlement à ladite platine tout en en autorisant un mouvement perpendiculairement à celle-ci, et par lesquels cette rondelle d'appui équipe par avance l'article concerné.

Par exemple, les moyens d'immobilisation et les moyens de confinement sont conjointement constitués par au moins deux bossages, qui, disposés en positions diamétralement opposées l'un par rapport à l'autre, sont solidaires de la platine, et entre lesquels sont disposés le joint d'étanchéité et la rondelle d'appui, avec un engagement à force de cette rondelle d'appui entre ces bossages.

En variante, les moyens d'immobilisation sont constitués par au moins une languette reliant la rondelle d'appui à l'article concerné, et les moyens de confinement par une saillie de retenue présente à cet effet sur la surface inférieure de cette rondelle d'appui.

Quoi qu'il en soit, la rondelle d'appui du dispositif de fixation suivant l'invention équipe par avance l'article concerné, et elle contribue au moins à assurer par elle-même le maintien convenable du joint d'étanchéité par rapport à celui-ci.

Aucune manipulation de cette rondelle d'appui ni de ce joint d'étanchéité n'est donc à prévoir pour la mise en oeuvre de ce dispositif de fixation.

Il n'y a en outre normalement ainsi aucun risque que cette rondelle d'appui ou que ce joint d'étanchéité viennent à échapper intempestivement à l'article qu'ils équipent.

Dans le cas, par ailleurs, où, pour un éventuel rattrapage d'aplomb, le perçage de la platine de cet article est allongé en boutonnière, il en est de même, suivant l'invention, pour la rondelle d'appui, et, lors d'un rattrapage d'aplomb, cette rondelle d'appui se déplace par rapport au moyen de fixation, conjointement avec l'ensemble de l'article, cependant que, serré à étanchéité sur le fût de ce moyen de fixation, le joint d'étanchéité, ainsi dûment calé sur ce moyen de fixation, demeure, lui, fixe.

Enfin, le dispositif de fixation suivant l'invention se présente avantageusement sous un encombrement relativement réduit, analogue, en tout cas, à celui d'un dispositif de fixation à rondelle d'appui et joint d'étanchéité de type classique, c'est-à-dire à rondelle d'appui et joint d'étanchétié formant des pièces indépendantes.

La présente invention a également pour objet tout article, et en particulier tout boîtier, qui, à rapporter sur un quelconque support, est équipé au moins d'un tel dispositif de fixation, tel que défini dans la revendication 10.

Les objets de l'invention, leurs caractéristiques et leurs avantages ressortiront d'ailleurs de la description qui va suivre, à titre d'exemple, en référence aux dessins schématiques annexés sur lesquels :
la figure 1 est une vue partielle en coupe transversale, suivant la ligne 1-1 de la figure 2, d'un boîtier équipé d'un dispositif de fixation suivant l'invention ;
la figure 2 est une vue partielle, en plan, de ce boîtier, suivant la flèche II de la figure 1 ;
la figure 3 en est une vue partielle de dessous, suivant la flèche III de la figure 1 ;
la figure 4 en est une vue partielle en perspective éclatée ;
les figures 5 et 6 sont des vues chacune respectivement analogues à celles des figures 1 et 2, pour une variante de réalisation du dispositif de fixation suivant l'invention.

Ces figures illustrent, à titre d'exemple, l'application de l'invention à un boîtier, et, plus précisément, à un corps de boîtier 10 auquel est normalement associé un couvercle non représenté.

Ce corps de boîtier 10 ne faisant pas partie, en soi, de la présente invention, il ne sera pas décrit dans tous ses détails ici.

Il suffira d'indiquer qu'il comporte un fond 11, par lequel il est destiné à être appliqué au support 12 sur lequel il doit être rapporté, et, s'étendant annulairement à la périphérie de ce fond 11, par exemple perpendiculairement à celui-ci, une paroi latérale 13.

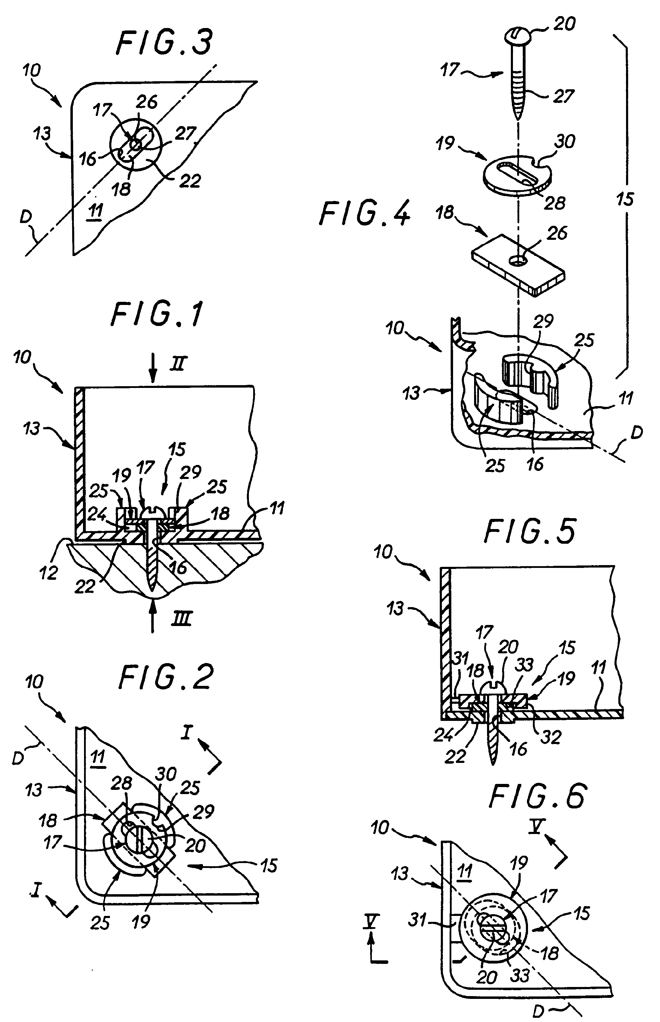

Dans la forme de réalisation plus particulièrement représentée sur les figures 1 à 4, la paroi latérale 13 est d'un seul tenant avec le fond 11, et l'ensemble a, en plan, un contour quadrangulaire à angles largement arrondis.

Au corps de boîtier 10 ainsi constitué il est associé, pour sa fixation au support 12, au moins un dispositif de fixation 15.

Par exemple, et tel que représenté, ce dispositif de fixation 15 est disposé dans l'un des angles du fond 11.

Il comporte, de manière connue en soi, un perçage 16, qui est propre au passage d'un quelconque moyen de fixation 17, par exemple une vis, tel que représenté, et, associés à ce perçage 16, d'une part, un joint d'étanchéité 18, qui est à superposer au fond 11 à l'aplomb de ce perçage 16, et, d'autre part, une rondelle d'appui 19, qui est à interposer entre le joint d'étanchéité 18 et la tête 20 du moyen de la fixation 17.

Dans la forme de réalisation représentée, et pour un éventuel rattrapage d'aplomb, le perçage 16 est allongé en boutonnière suivant une direction D, en étant par exemple incliné à 45° par rapport à l'un et l'autre des côtés correspondants de la paroi latérale 13.

Ce perçage 16 est en outre établi à la faveur d'une zone 22 du fond 11 qui, sur la face extérieure de ce fond 11, est surépaissie.

De manière connue en soi, alors que le corps de boîtier 10, dans son ensemble, est en matière synthétique, le joint d'étanchéité 18 est usuellement en matière élastique et la rondelle d'appui 19 est par exemple une rondelle métallique.

Suivant l'invention, et avec des modalités décrites plus en détail ultérieurement, à la rondelle d'appui 19 sont associés des moyens d'immobilisation propres à s'opposer à tout déplacement substantiel de cette rondelle d'appui 19 parallèlement au fond 11 tout en en autorisant un mouvement perpendiculairement à celui-ci, et, conjointement, sont associés, au joint d'étanchéité 18, des moyens de confinement propres à s'opposer à un échappement de ce joint d'étanchéité 18 hors de l'espace 24 s'étendant entre cette rondelle d'appui 19 et ce fond 11.

Dans la forme de réalisation représentée sur les figures 1 à 4, les moyens d'immobilisation et les moyens de confinement en question sont conjointement constitués par au moins deux bossages 25, qui, disposés en positions diamétralement opposées l'un par rapport à l'autre, sont solidaires du fond 11, en étant en pratique venus d'un seul tenant de celui-ci, et entre lesquels sont disposés le joint d'étanchéité 18 et la rondelle d'appui 19, avec un engagement à force de cette rondelle d'appui 19 entre ces bossages 25.

En pratique, seuls deux bossages 25 sont ainsi prévus et, de manière symétrique l'un par rapport à l'autre, ils s'étendent chacun suivant un segment d'un même cercle.

Plus précisément, ces deux bossages 25 sont disposés chacun respectivement de part et d'autre de la direction d'allongement D du percage 16 du fond 11.

Le joint d'étanchéité 18, quant à lui, se présente sous la forme d'une plaquette, de contour rectangulaire, qui, allongée entre les bossages 25, est, latéralement, au contact de l'un et de l'autre de ceux-ci, et qui, à chacune de ses extrémités, dépasse du cercle suivant lequel s'étendent conjointement ces bossages 25.

L'évidement central 26 qu'il présente pour le passage du fût 27 du moyen de fixation 17 a un contour circulaire.

Par contre, l'évidement central 28 que présente la rondelle d'appui 19 pour le passage de ce fût 27 est, lui, allongé en boutonnière, suivant la même direction d'allongement D que le perçage 16 du fond 11.

De préférence, entre cette rondelle d'appui 19 et l'un au moins des bossages 25 sont prévus des moyens d'indexation.

Par exemple, et tel que représenté, ces moyens d'indexation comportent une nervure 29, qui, en saillie sur la surface interne du bossage 25 concerné, s'étend perpendiculairement au fond 11 du corps de boîtier 10, sur toute la hauteur de ce bossage 25, et, affectant la périphérie de la rondelle d'appui 19, une échancrure 30 par laquelle cette rondelle d'appui 19 est adaptée à venir en prise avec cette nervure 29.

Le joint d'étanchéité 18 et la rondelle d'appui 19 sont mis en place entre les bossages 25 en atelier.

Du fait de son engagement à force entre les bossages 25, la rondelle d'appui 19 ne peut normalement échapper à ces bossages 25, et elle assure ainsi par elle-même la retenue du joint d'étanchéité 18.

Dûment indexée sur l'un des bossages 25, cette rondelle d'appui 19 ne peut par ailleurs pas tourner entre ces bossages 25, en sorte que son évidement central 28 s'étend en toute certitude suivant la même direction D que le perçage 16 du fond 11, en superposition à celui-ci.

Du fait des bossages 25, la rondelle d'appui 19 ne peut non plus aucunement se déplacer parallèlement au fond 11.

Elle est seulement susceptible d'un enfoncement plus ou moins accentué entre les bossages 25, perpendiculairement au fond 11.

Le moyen de fixation 17 peut également être mis en place en atelier.

Il peut aussi n'être mis en place que lors même de la pose du corps de boîtier 10 concerné.

Quoi qu'il en soit, cette mise en place se fait par engagement de son fût 27 à travers, successivement, l'évidement central 28 de la rondelle d'appui 19, l'évidement central 26 du joint d'étanchéité 18, et le percage 16 du fond 11.

Alors que ce fût 27 traverse avec jeu l'évidement central 28 de la rondelle d'appui 19 et le percage 16 du fond 11, il traverse sans jeu l'évidement central 26 du joint d'étanchéité 18.

Au contraire, ce joint d'étanchéité 18 est alors élastiquement serré, à étanchéité, sur ce fût 27.

Dans un premier temps, il n'est procédé qu'à un enfoncement limité, dans le support 12, du moyen de fixation 17, de manière à laisser au corps de boîtier 10 la possiblité d'être déplacé par rapport à ce moyen de fixation 17 si un rattrapage d'aplomb s'avère nécessaire.

Lors d'un tel déplacement, le corps de boîtier 10 entraîne avec lui la rondelle d'appui 19.

Seul demeure fixe, calé sur le fût 27 du moyen de fixation 17, le joint d'étanchéité 18.

Dans un deuxième temps, il est procédé à un enfoncement complet du moyen de fixation 17.

Sous la sollicitation de sa tête 20, la rondelle d'appui 19 vient comprimer le joint d'étanchéité 18, au bénéfice de l'étanchéité recherchée.

Dans la variante de réalisation représentée sur les figures 5 et 6, les moyens d'immobilisation associés à la rondelle d'appui 19 sont constitués par au moins une languette 31, qui, d'épaisseur réduite, à la manière d'un voile, relie cette rondelle d'appui 19 au corps de boîtier 10.

Dans la forme de réalisation représentée, cette languette 31 relie ainsi la rondelle d'appui 19 à la paroi latérale 13 du corps de boîtier 10, en étant d'un seul tenant tant avec cette rondelle d'appui 19 qu'avec cette paroi latérale 13.

En pratique, l'ensemble vient directement de moulage, et, pour faciliter ce moulage, la paroi latérale 13 forme initialement une pièce indépendante du fond 11, en étant ensuite convenablement solidarisée à celui-ci, par exemple par soudage à ultrasons.

Dans cette forme de réalisation, et contrairement à la forme de réalisation précédente, la rondelle d'appui 19 est donc en matière synthétique.

Comme précédemment, son évidement central 28 est allongé en boutonnière suivant la direction d'allongement D du perçage 16 du fond 11.

Conjointement, les moyens de confinement associés au joint d'étanchéité 18 sont constitués, dans cette forme de réalisation, par une saillie de retenue 32 présente à cet effet sur la surface inférieure de la rondelle d'appui 19.

En pratique, cette saillie de retenue 32 s'étend elle aussi suivant un périmètre allongé suivant la direction d'allongement D du perçage 16 du fond 11.

Dans la forme de réalisation représentée, elle est formée par le bord d'un logement 33, qui existe en creux sur la surface inférieure de la rondelle d'appui 19, et dans lequel est au moins en partie engagé le joint d'étanchéité 18.

Les dispositions sont telles que, une fois en place sous la rondelle d'appui 19, le joint d'étanchéité 18 ne peut échapper à la saillie de retenue 32, et, donc, à l'espace 24 s'étendant entre cette rondelle d'appui 19 et le fond 11.

Comme précédemment, la rondelle d'appui 19 est empêchée de se déplacer parallèlement au fond 11, par la languette 31 qui la relie à la paroi latérale 13.

Mais, du fait de la flexibilité de cette languette 31, elle peut se déplacer perpendiculairement à ce fond 11.

C'est ce qui se produit lors de l'enfoncement complet, dans le support 12, du moyen de fixation 17 mis en oeuvre.

Bien entendu, la présente invention ne se limite pas aux formes de réalisation décrites et représentées, mais englobe toute variante d'exécution et/ou de combinaison de leurs divers éléments.

En particulier, les bossages de la forme de réalisation illustrée par les figures 1 à 4 pourraient se rejoindre circulairement l'un l'autre en continu.

En outre, le domaine d'application de l'invention n'est pas limité à celui des seuls boîtiers.

Il s'étend au contraire aussi bien à celui de n'importe quel article à rapporter sur un quelconque support, le ou les dispositifs de fixation correspondants intervenant alors sur une platine d'un tel article.

Dans le cas d'un boîtier, c'est le fond qui constitue cette platine.

## Revendications

1. Dispositif de fixation pour article à rapporter sur un quelconque support, du genre comportant au moins un perçage (16) ménagé dans une platine (11) dudit article pour le passage d'un moyen de fixation (17), par exemple une vis, un joint d'étanchéité (18) à superposer à ladite platine (11) à l'aplomb de ce perçage (16), une rondelle d'appui (19) à superposer audit joint d'étanchéité (18) et des moyens de confinement (25,32) associés audit joint d'étanchéité (18) pour s'opposer à un échappement de ce joint d'étanchéité (18) hors de l'espace (24) s'étendant entre ladite rondelle d'appui (19) et ladite platine (11), caractérisé en ce que, à ladite rondelle d'appui (19), sont associés des moyens d'immobilisation (25,31) qui s'opposent à tout déplacement substantiel de cette rondelle d'appui (19) parallèlement à ladite platine (11) tout en en autorisant un mouvement perpendiculairment à celle-ci, et par lesquels cette rondelle d'appui (19) équipe par avance l'article concerné.

2. Dispositif de fixation suivant la revendication 1, caractérisé en ce que les moyens d'immobilisation et les moyens de confinement sont conjointement constitués par au moins deux bossages (25) qui, disposés en positions diamétralement opposées l'un par rapport à l'autre, sont solidaires de la platine (11), et entre lesquels sont disposés le joint d'étanchéité (18) et la rondelle d'appui (19), avec un engagement à force de ladite rondelle d'appui (19) entre lesdits bossages (25).

3. Dispositif de fixation suivant la revendication 2, caractérisé en ce que, le perçage (16) de la platine (11) étant allongé en boutonnière pour un éventuel rattrapage d'aplomb, les deux bossages (25) sont disposés chacun respectivement de part et d'autre de la direction d'allongement (D) correspondante, et l'évidement central (28) de la rondelle d'appui (19) est lui-même allongé en boutonnière suivant la même direction d'allongement (D).

4. Dispositif de fixation suivant la revendication 3, caractérisé en ce que entre la rondelle d'appui (19) et l'un au moins des bossages (25) sont prévus des moyens d'indexation (29, 30).

5. Dispositif de fixation suivant l'une quelconque des revendications 2 à 4, caractérisé en ce que, de manière symétrique l'un par rapport à l'autre, chacun des bossages (25) s'étend suivant un segment d'un même cercle.

6. Dispositif de fixation suivant la revendication 5, caractérisé en ce que le joint d'étanchéité (18) se présente sous la forme d'une plaquette, qui, allongée entre les bossages (25), est, latéralement, au contract de l'un et de l'autre de ceux-ci.

7. Dispositif de fixation suivant la revendication 1, caractérisé en ce que les moyens d'immobilisation sont constitués par au moins une languette (31) reliant la rondelle d'appui (19) à l'article concerné, et les moyens de confinement par une saillie de retenue (32) présente à cet effet sur la surface inférieure de cette rondelle d'appui (19).

8. Dispositif de fixation suivant la revendication 7, caractérisé en ce que, le perçage (16) de la platine (11) étant allongé en boutonnière pour un éventuel rattrapage d'aplomb, la saillie de retenue (32) s'étend suivant un périmètre allongé suivant la même direction d'allongement (D) que ledit perçage (16), et l'évidement central (28) de la rondelle d'appui (19) est lui-méme allongé en boutonnière suivant celle-ci.

9. Dispositif de fixation suivant l'une quelconque des revendications 7, 8, caractérisé en ce que la saillie de retenue (32) est formée par le bord d'un logement (33), qui existe en creux sur la surface inférieure de la rondelle d'appui (19), et dans lequel est au moins en partie engagé le joint d'étanchéité (18).

10. Article à rapporter sur un quelconque support et présentant une platine (11) équipée à cet effet d'au moins un dispositif de fixation (15), caractérisé en ce que ledit dispositif de fixation (15) est conforme à l'une quelconque des revendications 1 à 9.

11. Article suivant la revendication 10, caractérisé en ce que, s'agissant d'un boîtier, la platine (11) en constitue le fond.

12. Article suivant la revendication 11, caractérisé en ce que, le dispositif de fixation (15) étant conforme à la revendication 7, la languette (31) constituant les moyens d'immobilisation relie la rondelle d'appui (19) à la paroi latérale (13) du boîtier qu'il forme.

13. Article suivant la revendication 12, caractérisé en ce que la paroi latérale (13) du boîtier qu'il forme est une pièce indépendante du fond (11) de ce boîtier.

## Patentansprüche

1. Vorrichtung zur Befestigung von Gegenständen auf einer beliebigen Unterlage mit mindestens einem in einer Platte (11) des genannten Gegenstandes vorhandenen Loch (16) zur Durchführung eines Befestigungsmittels (17), beispielsweise einer Schraube, mit einer in senkrechter Richtung zu diesem Loch (16) auf die genannte Platte (11) auflegbaren Dichtung (18), mit einer über die genannte Dichtung (18) legbaren Unterlegscheibe (19) und mit der genannten Dichtung (18) zugeordneten Einschließmitteln (25, 32), die einem Herausfallen dieser Dichtung (18) aus dem Raum (24) entgegenwirken, welcher sich zwischen der genannten Unterlegscheibe (19) und der genannten Platte (11) erstreckt,
dadurch **gekennzeichnet,**
daß der genannten Unterlegscheibe (19) Haltemittel (25, 31) zugeordnet sind, die jede wesentliche Verschiebung dieser Unterlegscheibe (19) parallel zu der genannten Platte (11) verhindern, während eine zu dieser senkrechte Bewegung ermöglicht wird, und durch welche Haltemittel der betroffene Gegenstand im voraus mit dieser Unterlegscheibe (19) ausgestattet ist.

2. Befestigungsvorrichtung nach Anspruch 1,
dadurch **gekennzeichnet**,
daß die Haltemittel und die Einschließmittel gemeinsam durch mindestens zwei Vorsprünge (25) gebildet werden, die einander diametral gegenüberliegend an der Platte (11) befestigt sind und zwischen denen die Dichtung (18) und die Unterlegscheibe (19) angeordnet sind mit einem Klemmsitz der genannten Unterlegscheibe (19) zwischen den genannten Vorsprüngen (25).

3. Befestigungsvorrichtung nach Anspruch 2,
dadurch **gekennzeichnet,**
daß das in der Platte (11) vorhandene Loch (16) als Langloch ausgebildet ist, um ein nachträgliches Ausrichten in die Lotrechte zu ermöglichen, daß die beiden Vorsprünge (25) auf der einen bzw. der anderen Seite der zugehörigen Längsrichtung (D) angeordnet sind und daß die zentrale Ausnehmung (28) der Unterlegscheibe (19) ihrerseits, derselben Längsrichtung (D) folgend, als Langloch ausgebildet ist.

4. Befestigungsvorrichtung nach Anspruch 3,
dadurch **gekennzeichnet**,
daß zwischen der Unterlegscheibe (19) und mindestens einem der Vorsprünge (25) Markierungsmittel (29, 30) vorgesehen sind.

5. Befestigungsvorrichtung nach einem der Ansprüche 2 bis 4,
dadurch **gekennzeichnet**,
daß die beiden Vorsprünge (25) zueinander symmetrisch sind und sich längs eines Segments desselben Kreises erstrecken.

6. Befestigungsvorrichtung nach Anspruch 5,
dadurch **gekennzeichnet**,
daß die Dichtung (18) als Plättchen ausgebildet ist, das sich zwischen den Vorsprüngen (25) erstreckt und seitlich mit dem einen und dem anderen dieser Vorsprünge in Kontakt steht.

7. Befestigungsvorrichtung nach Anspruch 1,
dadurch **gekennzeichnet**,
daß die Haltemittel durch mindestens eine Zunge (31) gebildet werden, die die Unterlegscheibe (19) an den betroffenen Gegenstand anbindet, und daß die Einschließmittel durch eine Halteschulter (32) gebildet werden, die hierzu auf der unteren Oberfläche dieser Unterlegscheibe (19) vorhanden ist.

8. Befestigungsvorrichtung nach Anspruch 7,
dadurch **gekennzeichnet**,
daß das in der Platte (11) vorhandene Loch (16) als Langloch ausgebildet ist, um ein nachträgliches Ausrichten in die Lotrechte zu ermöglichen, daß sich die Halteschulter (32) längs einer Linie erstreckt, die mit der Längsrichtung (D) des genannten Lochs (16) übereinstimmt, und daß die zentrale Ausnehmung (28) der Unterlegscheibe (19) ihrerseits als Langloch ausgebildet ist mit derselben Ausrichtung.

9. Befestigungsvorrichtung nach einem der Ansprüche 7 oder 8,
dadurch **gekennzeichnet**,
daß die Halteschulter (32) durch den Rand einer Aufnahme (33) gebildet ist, die als Vertiefung in der unteren Oberfläche der Unterlegscheibe vorhanden ist und in welcher zumindest teilweise die Dichtung (18) verankert ist.

10. Gegenstand mit einer Platte (11) zur Befestigung auf einer beliebigen Unterlage, der hierfür mit mindestens einer Befestigungsvorrichtung (15) ausgestattet ist,
dadurch **gekennzeichnet**,
daß die genannte Befestigungsvorrichtung (15) gemäß einem der Ansprüche 1 bis 9 gebildet ist.

11. Gegenstand nach Anspruch 10,
dadurch **gekennzeichnet**,
daß es sich um ein Gehäuse handelt und daß die Platte (11) dessen Boden bildet.

12. Gegenstand nach Anspruch 11,
dadurch **gekennzeichnet**,
daß die Befestigungsvorrichtung (15) gemäß Anspruch 7 ausgebildet ist und daß die das Haltemittel bildende Zunge (31) die Unterlegscheibe (19) mit der Seitenwand (13) des von dem Gegenstand gebildeten Gehäuses verbindet.

13. Gegenstand nach Anspruch 12,
dadurch **gekennzeichnet**
daß die Seitenwand (13) des von ihm gebildeten Gehäuses ein von dem Boden (11) des Gehäuses unabhängiges Teil ist.

## Claims

1. A device for fixing an article which is to be connected to a support of some kind, of the type comprising at least one hole (16) provided in a plate (11) of said article for passage of a fixing means (17), such as a screw, a sealing joint (18) to be superposed on said plate (11) directly above the hole (16), a round support disc (19) to be superposed on said sealing joint (18) and confining means (25, 32) associated with said sealing joint (18) for preventing the sealing joint (18) from coming out of the space extending between said round support disc (19) and said plate (11), characterised in that associated with said round support disc (19) are immobilising means (25, 31) which prevent any considerable displacement of the round support disc (19) parallel to said plate (11) whilst allowing it to move perpendicularly thereto, and the article in question is provided in advance with the immobilising means by the round support disc (19).

2. A fixing device according to Claim 1, characterised in that the immobilising means and the confining means are conjointly constituted of at least two bosses (25), which, being disposed in mutually diametrally opposed positions, are fixed to the plate (11), and the sealing joint (18) and the round support disc (19) are disposed between them, with the round support disc (19) being forcibly engaged between said bosses (25).

3. A fixing device according to Claim 2, characterised in that the hole (16) of the plate (11) is elongate in a button-hole configuration for providing possible equilibrium, and the two bosses (25) are each respectively disposed on either side of the corresponding extension direction (D), and the central recess (28) of the round support disc (19) is itself elongate in a button-hole configuration in the same direction of extension (D).

4. A fixing device according to Claim 3, characterised in that provided between the round support disc (19) and at least one of the bosses (25) are indexing means (29, 30).

5. A fixing device according to any one of Claims 2 to 4, characterised in that each of the bosses (25) extends symmetrically to the other along a segment of one and the same circle.

6. A fixing device according to Claim 5, characterised in that the sealing joint (18) is in the form of a plate which extends between the bosses (25) and makes contact laterally with both of them.

7. A fixing device according to Claim 1, characterised in that the immobilising means are constituted by at least one tongue portion (31) which connects the round support disc (19) to the article in question, and the confinement means by virtue of a retaining projection (32) provided for that purpose on the bottom surface of the round support disc (19).

8. A fixing device according to Claim 7, characterised in that the hole (16) in the plate (11) is elongate in a buttonhole configuration to provide for possible equilibrium, the retaining projection (32) extends along an elongate perimeter in the same extension direction (D) as said hole (16), and the central recess (28) of the round support disc (19) is itself elongate in a buttonhole configuration following it.

9. A fixing device according to any of Claims 7, 8, characterised in that the retaining projection (32) is formed by the edge of a recess (33) which is hollowed out in the bottom surface of the round support disc (19), and in which the sealing joint (18) at least partly engages.

10. An article to be connected to any support and having a plate (11) provided for that purpose with at least one fixing device (15), characterised in that said fixing device (15) is in accordance with any of Claims 1 to 9.

11. An article according to Claim 10, characterised in that in the case of a box the plate (11) forms its bottom.

12. An article according to Claim 11, characterised in that the fixing device (15) is in accordance with Claim 7, the tongue portion (31) constituting immobilising means which connect the round support disc (19) to the lateral wall (13) of the box which it forms.

13. An article according to Claim 12, characterised in that the lateral wall (13) of the box which it forms is a piece which is independent of the bottom (11) of the box.
